# FASCICULE DE BREVET EUROPEEN

(11) **EP 0 735 294 B1**
(45) Date de publication et mention de la délivrance du brevet: **10.10.2001**
(21) Numéro de dépôt: 96400355.2
(22) Date de dépôt: 21.02.1996
(51) Int. Cl.: F16F 1/387, B60G 25/00

(54) **Articulation élastique notamment pour un train roulant de véhicule automobile**
Elastisches Gelenk, insbesondere für eine Kraftfahrzeugachse
Elastic articulation, especially for an axle of a motor vehicle

(30) Priorité: 28.02.1995 FR 9502320
(43) Date de publication de la demande: 02.10.1996
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, 35410 Domloup (FR)
(74) Mandataire: Lanceplaine, Jean-Claude

(56) Documents cités:
- EP-A- 0 131 795
- EP-A- 0 412 863
- DE-A- 3 108 701
- DE-A- 3 536 284
- DE-A- 3 635 612
- DE-A- 4 010 378
- GB-A- 2 010 438
- GB-A- 2 018 948
- PATENT ABSTRACTS OF JAPAN vol. 010, no. 062 (M-460), 12 Mars 1986 & JP-A-60 208650 (TOUKAI GOMU KOGYO KK;OTHERS: 01), 21 Octobre 1985,
- PATENT ABSTRACTS OF JAPAN vol. 013, no. 373 (M-861), 18 Août 1989 & JP-A-01 126447 (KINUGAWA RUBBER IND CO LTD), 18 Mai 1989,

## Description

La présente invention a pour objet une articulation élastique pour le montage d'un train roulant de véhicule automobile.

Les trains roulants de véhicules automobiles et notamment les essieux arrières sont reliés à la caisse du véhicule par des articulations élastiques.

Généralement deux articulations élastiques sont disposées symétriquement de part et d'autre de l'axe longitudinal du véhicule automobile.

L'articulation élastique ne doit pas posséder la même raideur élastique selon toutes les directions.

En effet, afin d'obtenir un bon filtrage des vibrations transmises par le train roulant à la caisse du véhicule, il est nécessaire que l'articulation présente la raideur la plus faible possible dans le sens longitudinal.

La raideur dans le sens vertical doit être compatible avec la charge de la caisse du véhicule que supporte l'articulation.

Par contre, la raideur la plus grande possible est nécessaire dans la direction transversale afin d'assurer le guidage transversal du train roulant par rapport à la caisse du véhicule.

Les articulations élastiques utilisées jusqu'à présent comportent une armature externe cylindrique et une armature interne coaxiale reliées entre elles par un bloc en matériau élastomère et susceptibles de se déplacer l'une par rapport à l'autre.

Pour augmenter la raideur élastique de l'articulation selon la direction transversale, au moins un pavé de butée est disposé entre deux portions en vis à vis et sensiblement parallèlement à l'axe de l'articulation, respectivement de l'armature externe et l'armature interne.

Mais, ce genre d'articulation élastique est particulièrement complexe et forme un ensemble monobloc qui ne permet pas de filtrer de manière efficace les mouvements de faibles amplitudes.

On connaît également dans le document GB-A-2 018 948 une articulation élastique pour le montage d'un train roulant de véhicule automobile, comportant un élément amortissant les débattements verticaux et longitudinaux dudit véhicule et un élément coaxial à l'élément amortissant et filtrant les vibrations de faibles amplitudes longitudinales dudit véhicule automobile.

L'invention a pour but de proposer une articulation élastique permettant d'éviter les inconvénients mentionnés ci-dessus.

L'invention a donc pour objet une articulation élastique pour le montage d'un train roulant de véhicule automobile, comportant un élément amortissant les débattements verticaux et longitudinaux dudit véhicule et un élément coaxial à l'élément amortissant et filtrant les vibrations de faibles amplitudes longitudinales dudit véhicule, caractérisée en ce que l'élément filtrant est un élément indépendant de l'élément amortissant, l'élément amortissant et l'élément filtrant étant emmanchés l'un dans l'autre et comportant chacun deux blocs en matériau élastomère symétriques et opposés, disposés alternativement et à 90° les uns des autres.

Selon d'autres caractéristiques de l'invention :
- l'élément amortissant comprend une armature métallique externe formant une couronne munie d'une collerette supérieure dirigée vers l'extérieur de la couronne et d'une collerette inférieure dirigée vers l'intérieure de ladite couronne et dans laquelle sont fixés les deux blocs en matériau élastomère couvrant chacun un secteur angulaire opposé de ladite couronne, chaque bloc comportant une masse centrale prolongée à sa partie supérieure par un bourrelet recouvrant partiellement la collerette supérieure et à sa partie inférieure par un bourrelet recouvrant partiellement la collerette inférieure,
- l'armature externe de l'élément amortissant est en acier,
- l'élément filtrant comprend un noyau métallique central et deux armatures métalliques extérieures et opposées, de forme extérieure sectorielle et comportant à leur partie supérieure un collet, ledit noyau et lesdites armatures étant reliés entre eux par les deux blocs en matériau élastomère qui comportent chacun une butée porteuse recouvrant le collet correspondant,
- le diamètre extérieur déterminé par les deux armatures de l'élément filtrant est légèrement supérieur au diamètre intérieur de la couronne de l'élément amortissant pour obtenir une précompression des deux blocs en matériau élastomère dudit élément filtrant,
- le noyau central et les deux armatures de l'élément filtrant sont en acier,
- le noyau central est formé par un tube,
- chaque bloc en matériau élastomère de l'élément filtrant comporte un feuilletage intermédiaire,
- l'articulation comporte des moyens de positionnement et de verrouillage de l'élément amortissant dans l'élément filtrant qui sont formés par deux trous radiaux diamétralement opposés, ménagés dans la couronne de l'élément filtrant et par deux bossages diamétralement opposés, ménagés sur les faces externes des armatures extérieures de l'élément amortissant, les deux bossages étant destinés à pénétrer dans les deux trous au moment de l'emmanchement de l'élément filtrant dans l'élément amortissant,
- l'élastomère des blocs de l'élément amortissant possède une rigidité différente de l'élastomère des blocs de l'élément filtrant,
- l'élastomère des blocs de l'élément amortissant est constitué par un caoutchouc de synthèse,
- l'élastomère des blocs de l'élément filtrant est constitué par un mélange comprenant du caoutchouc naturel et des additifs.

D'autres avantages de l'invention apparaîtront au cours de la description qui va suivre, donnée à titre d'exemple et faite en référence aux dessins annexés, sur lesquels :
- la Fig. 1 est une vue latérale schématique illustrant le principe général de montage d'un train arrière par rapport à la caisse d'un véhicule automobile,
- la Fig. 2 est une vue schématique de dessus de l'articulation élastique conforme à l'invention,
- la Fig. 3 est une vue en coupe selon la ligne 3-3 de la Fig. 2,
- la Fig. 4 est une vue en coupe longitudinale de l'élément amortissant de l'articulation élastique conforme à l'invention,
- la Fig. 5 est une vue de dessus de la Fig. 4,
- la Fig. 6 est une vue en coupe longitudinale de l'élément filtrant de l'articulation élastique conforme à l'invention,
- la Fig. 7 est une vue de dessus de la Fig. 6,
- la Fig. 8 est une vue identique à la Fig. 3 montrant l'agencement de l'articulation élastique en vue du montage du train arrière.

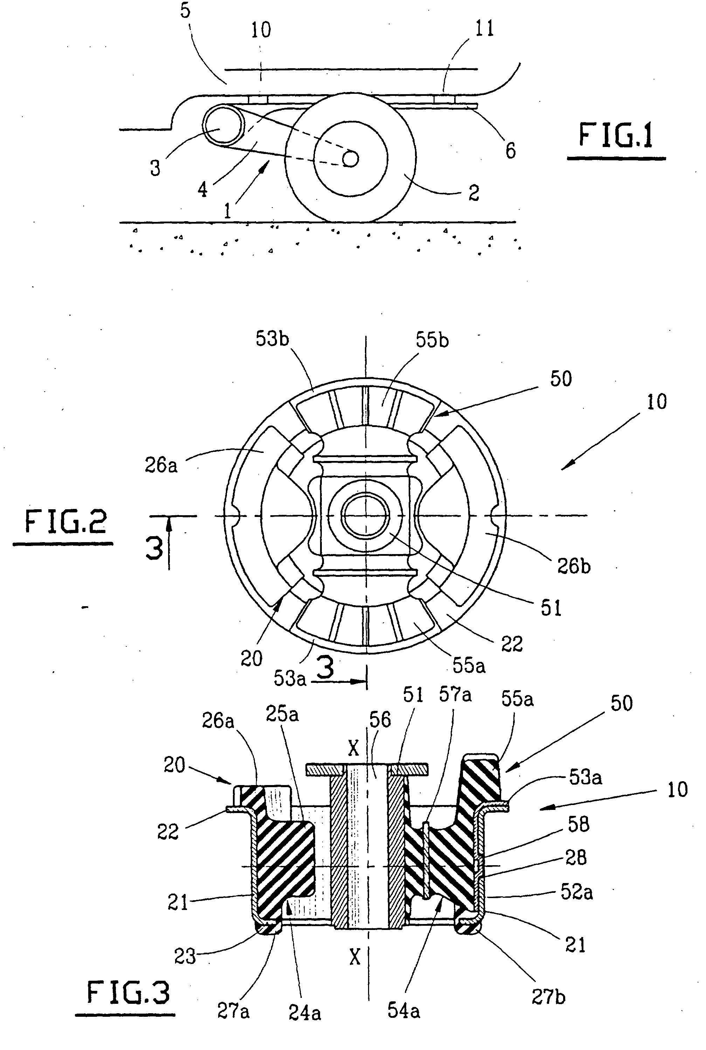

On a représenté à la Fig. 1 un train roulant arrière de véhicule automobile et désigné dans son ensemble par la référence 1, comportant notamment des roues 2 reliées à une poutre centrale 3 par des bras latéraux 4.

La poutre centrale 3 est reliée à la caisse 5 par une traverse de train arrière 6 avec interposition de deux articulations élastiques 10 conforment à l'invention et de deux liaisons élastiques 11.

Ainsi que représenté sur les Figs. 2 et 3, l'articulation élastique 10 présente une forme générale cylindrique circulaire et elle est agencée de manière que son axe longitudinal X-X soit perpendiculaire à la direction longitudinale du véhicule.

L'articulation élastique 10 comprend deux éléments indépendants, un élément 20 amortissant les débattements verticaux et longitudinaux et un élément 50 filtrant les faibles amplitudes, indépendant et coaxial à l'élément 20 amortissant.

Les éléments 20 et 50 sont susceptibles de se déplacer l'un par rapport à l'autre.

Comme représenté sur les Figs. 3 à 5, l'élément amortissant 20 comprend une armature métallique extérieure 21 formant une couronne munie d'une collerette supérieure 22 dirigée vers l'extérieur de la couronne 21 et d'une collerette inférieure 23 dirigée vers l'intérieur de ladite couronne 21.

Deux blocs en matériau élastomère, respectivement 24a et 24b, sont surmoulés et adhérisés sur la face interne de la collerette 21 formant l'armature extérieure.

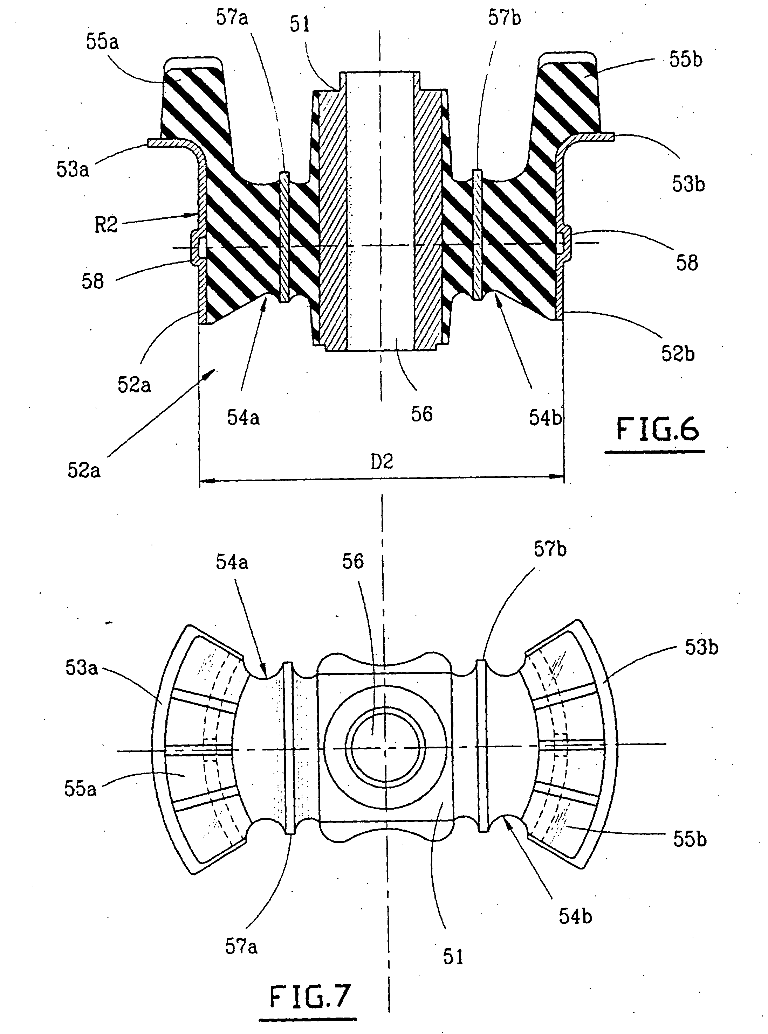

Comme cela apparaît à la Fig. 5, chaque bloc 24a et 24b couvre un secteur angulaire opposé de la couronne 21 et comporte une masse centrale 25a et 25b prolongée à sa partie supérieure par un bourrelet 26a et 26b recouvrant partiellement la collerette supérieure 22 et à sa partie inférieure par un bourrelet 27a et 27b recouvrant partiellement la collerette inférieure 23.

Ainsi, les masses centrales 25a et 25b des blocs 24a et 24b orientées vers l'intérieur de la couronne 21 ont une fonction de butée radiale tandis que les bourrelets supérieurs 26a et 26b qui recouvrent chacun un secteur angulaire opposé de la collerette supérieure 22 ont une fonction de butée d'attaque et les bourrelets inférieurs 27a et 27b qui recouvrent chacun un secteur angulaire opposé de la collerette inférieure 23 ont une fonction de butée de détente.

La couronne 21 formant l'armature extérieure est par exemple en acier et l'élastomère des blocs 24a et 24b de l'élément amortissant 20 est constitué par un caoutchouc de synthèse, comme par exemple du polybutadiène.

L'élément filtrant 50 représenté plus en détail sur les Figs. 6 et 7 se compose d'un noyau métallique central 51 et de deux armatures métalliques extérieures, respectivement 52a et 52b, reliées au noyau central 51 par deux blocs en matériau élastomère, respectivement 54a et 54b.

Les deux armatures extérieures 52a et 52b ont une forme extérieure sectorielle comme représentée à la Fig. 7 et comportent à leur partie supérieure un collet, respectivement 53a et 53b.

Chaque bloc 54a et 54b comporte à sa partie supérieure une butée porteuse filtrante 55a et 55b recouvrant le collet 53a et 53b correspondant.

Le noyau central 51 et les deux armatures 52a et 52b sont par exemple en acier et le noyau central 51 est formé par un tube comportant un orifice 56 pour le passage d'un organe de fixation de l'articulation élastique avec la caisse 5 du véhicule, comme on le verra ultérieurement.

Les blocs 54a et 54b en matériau élastomère peuvent comporter également chacun un feuilletage, respectivement 57a et 57b, dont le but est de doubler la raideur radiale de ces deux blocs.

Le rayon extérieur R2 de chaque armature extérieure 52a et 52b de l'élément filtrant 50 est égal au rayon intérieur R1 de l'armature externe 21 de l'élément amortissant 20.

L'élastomère des deux blocs 54a et 54b de l'élément filtrant 50 est constitué par un mélange comprenant du caoutchouc naturel et des additifs comme par exemple de l'huile, du noir de carbone ou un antioxydant.

L'assemblage de l'articulation élastique 10 est réalisé de la façon suivante.

Tout d'abord, on réalise l'élément absorbant 20 de façon à surmouler les blocs 24a et 24b en matériau élastomère à l'intérieur de l'armature externe 21, puis on réalise l'élément filtrant 50 pour surmouler les blocs 54a et 54b en matériau élastomère entre le noyau central 51 et les deux armatures extérieures 52a et 52b.

Ensuite, on emmanche l'élément filtrant 50 à l'intérieur de l'élément amortissant 20 afin que les faces externes des armatures 52a et 52b dudit élément filtrant viennent s'appliquer sur la face interne de l'armature 21 dudit élément absorbant.

Ainsi, les blocs 24a, 24b et 54a, 54b respectivement de l'élément absorbant 20 et de l'élément filtrant 50 sont disposés alternativement et à 90° les uns par rapport aux autres, comme représenté à la Fig. 2.

Le maintien de l'élément filtrant 50 dans l'élément amortissant 20 est réalisé par des moyens de positionnement et de verrouillage.

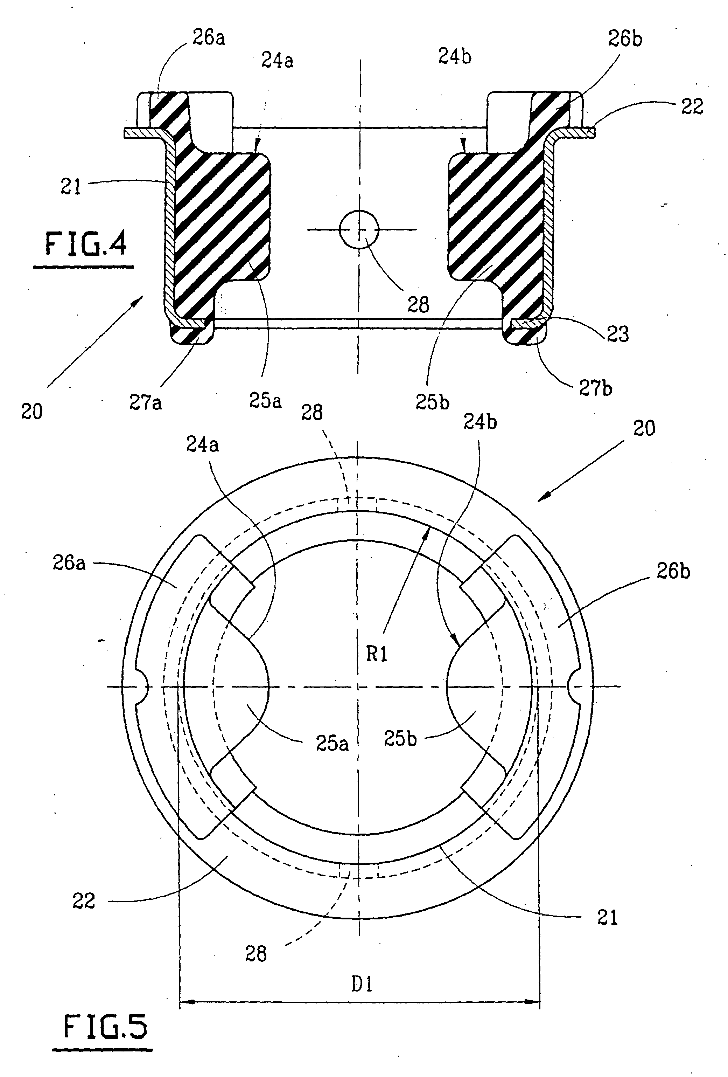

Ces moyens de positionnement et de verrouillage sont formés par deux trous radiaux 28 diamétralement opposés et ménagés dans la couronne 21 de l'élément filtrant 20 entre les deux blocs 25a et 25b (Figs. 4 et 5) et par deux bossages 58 diamétralement opposés et ménagés sur les faces externes des armatures extérieures 52a et 52b de l'élément amortissant 50 (Fig. 6).

Au moment de l'emmanchement de l'élément filtrant 50 dans l'élément amortissant 20, les deux bossages 58 pénètrent dans les deux trous 28 et assurent le positionnement et le verrouillage dudit élément amortissant dans ledit élément filtrant.

La solution inverse peut être envisagée en prévoyant des bossages tournés vers l'intérieur sur l'armature externe 21 de l'élément amortissant et des trous sur les armatures extérieures 54a et 54b de l'élément filtrant.

D'autre part, le diamètre extérieur D2 (Fig. 6) déterminé par les deux armatures 52a et 52b de l'élément filtrant 50 est légèrement supérieur au diamètre intérieur D1 (Fig. 5) de la couronne 21 de l'élément amortissant 20 pour obtenir une précompression des deux blocs 54a et 54b de l'élément filtrant 50 au moment de l'emmanchement serré dudit élément filtrant 50 dans l'élément amortissant 20.

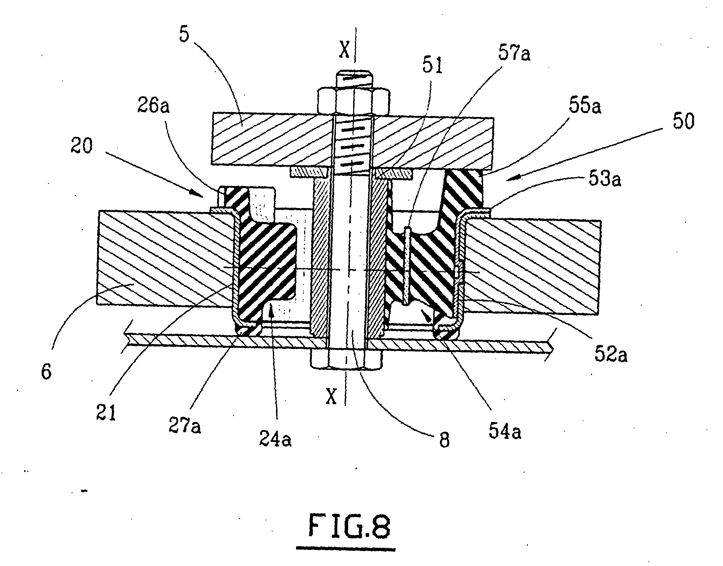

Comme représenté à la Fig. 8, l'armature externe 21 de l'élément amortissant 20 est emmanchée serrée dans la traverse 6 du train arrière et les armatures extérieures 52a et 52b de l'élément filtrant 50 sont rendus solidaires de la caisse 5 du véhicule par l'intermédiaire d'un organe de fixation 8 traversant l'orifice 56 du noyau central 51.

Une précharge initiale est éventuellement appliquée sur les butées 55a et 55b de l'élément filtrant 50.

Lors des petits déplacements ou vibrations de faibles amplitudes, seuls les blocs 54a et 54b en matériau élastomère de l'élément filtrant 50 sont sollicités.

Il n'y a pas de transfert d'effort vers la caisse du véhicule à isoler.

Lorsque l'amplitude verticale croît, les butées d'attaque constituées par les bourrelets 26a et 26b de l'élément amortissant 20 ou les butées de détente constituées par les bourrelets 27a et 27b dudit élément amortissant 20 agissent et réduisent considérablement le phénomène de "tamisage" longitudinal ou de "tambourinement" vertical sur le véhicule.

L'articulation élastique selon l'invention présente l'avantage de pouvoir obtenir un gain important au niveau du confort acoustique et vibratoire.

En effet, les élastomères constituant les blocs de l'élément amortissant et de l'élément filtrant et correspondant aux deux fonctions recherchées sont différents au point de vue moléculaire et possèdent des duretés différentes ou un module différent ce qui permet de différencier plus aisément les flexibilités et les comportements recherchés ce qui n'est pas le cas lors de l'utilisation d'un élastomère unique.

## Revendications

1. Articulation élastique (1) pour le montage d'un train roulant de véhicule automobile, comportant un élément (20) amortissant les débattements verticaux et longitudinaux dudit véhicule et un élément (50) coaxial à l'élément amortissant (20) et filtrant les vibrations de faibles amplitudes longitudinales dudit véhicule, **caractérisée en ce que** l'élément (50) filtrant est un élément indépendant de l'élément amortissant (20), l'élément amortissant (20) et l'élément filtrant (50) étant emmanchés l'un dans l'autre et comportant chacun deux blocs en matériau élastomère (24a, 24b et 54a, 54b) symétriques et opposés, disposés alternativement et à 90° les uns des autres.

2. Articulation élastique selon la revendication 1, **caractérisée en ce que** l'élément amortissant (20) comprend une armature métallique (21) externe formant une couronne munie d'une collerette supérieure (22) dirigée vers l'extérieur de la couronne (21) et d'une collerette inférieure (23) dirigée vers l'intérieur de ladite couronne (21) et dans laquelle sont fixés les deux blocs (25a, 25b) en matériau élastomère couvrant chacun un secteur angulaire opposé de ladite couronne (21), chaque bloc (24a, 24b) comportant une masse centrale (25a, 25b) prolongée à sa partie supérieure par un bourrelet (26a, 26b) recouvrant partiellement la collerette supérieure (22) et à sa partie inférieure par un bourrelet (27a, 27b) recouvrant partiellement la collerette inférieure (23).

3. Articulation élastique selon la revendication 2, **caractérisée en ce que** l'armature externe (21) est en acier.

4. Articulation élastique selon la revendication 1, **caractérisée en ce que** l'élément filtrant (50) comprend un noyau métallique central (51) et deux armatures métalliques (52a, 52b) extérieures et opposées, de forme extérieure sectorielle et comportant à leur partie supérieure un collet (53a, 53b), ledit noyau (51) et lesdites armatures (52a, 52b) étant reliées entre eux par les deux blocs (54a, 54b) en matériau élastomère qui comportent chacun une butée porteuse (55a, 55b) recouvrant le collet (53a, 53b) correspondant.

5. Articulation élastique selon l'une quelconque des revendications 2 à 4, **caractérisée en ce que** le diamètre extérieur déterminé par les deux armatures (52a, 52b) de l'élément filtrant (50) est légèrement supérieur au diamètre intérieur de la couronne (21) de l'élément amortissant (20) pour obtenir une précompression des deux blocs (54a, 54b) en matériau élastomère de l'élément filtrant (50).

6. Articulation élastique selon les revendications 4 et 5, **caractérisée en ce que** le noyau central (51) et les deux armatures (52a, 52b) sont en acier.

7. Articulation élastique selon l'une quelconque des revendications 4 à 6, **caractérisée en ce que** le noyau central (51) est formé par un tube.

8. Articulation élastique selon les revendications 1 et 4, **caractérisée en ce que** le bloc (54a, 54b) en matériau élastomère de l'élément filtrant (50) comporte un feuilletage intermédiaire (57a , 57b).

9. Articulation élastique selon l'une quelconque des revendications précédentes, **caractérisée en ce qu'**elle comporte des moyens (28, 58) de positionnement et de verrouillage de l'élément amortissant (20) dans l'élément filtrant (50).

10. Articulation élastique selon la revendication 9, **caractérisée en ce que** les moyens de positionnement et de verrouillage sont formés par deux trous radiaux (28) diamétralement opposés, ménagés dans la couronne (21) de l'élément filtrant et par deux bossages (58) diamétralement opposés, ménagés sur les faces externes des armatures extérieures (52a, 52b) de l'élément amortissant (50), les deux bossages (58) étant destinés à pénétrer dans les deux trous (28) au moment de l'emmanchement de l'élément filtrant (50) dans l'élément amortissant (20).

11. Articulation élastique selon l'une quelconque des revendications 1 à 8, **caractérisée en ce que** l'élastomère des blocs (24a, 24b) de l'élément amortissant (20) possède une rigidité différente de l'élastomère des blocs (54a, 54b) de l'élément filtrant (50).

12. Articulation élastique selon la revendication 11, **caractérisée en ce que** l'élastomère des blocs (24a, 24b) de l'élément amortissant (20) est constitué par un caoutchouc de synthèse.

13. Articulation élastique selon la revendication 11, **caractérisée en ce que** l'élastomère des blocs (54a, 54b) de l'élément filtrant (50) est constitué par un mélange comprenant du caoutchouc naturel et des additifs.

## Claims

1. Elastic articulation (1) for the mounting of a motor vehicle axle subframe, comprising an element (20) damping the vertical and longitudinal deflections of the said vehicle and an element (50) coaxial with the damping element (20) and filtering the vibrations of small longitudinal amplitudes of the said vehicle, **characterized in that** the filtering element (50) is an element independent of the damping element (20), the damping element (20) and the filtering element (50) being fastened the one inside the other and each comprising two blocks of elastomer material (24a, 24b and 54a, 54b) which are symmetric and opposed and are disposed alternately and at 90° to one another.

2. Elastic articulation according to Claim 1, **characterized in that** the damping element (20) comprises an external metal armature (21) forming a bush furnished with an upper flange (22) directed towards the outside of the bush (21) and with a lower flange (23) directed towards the inside of the said bush (21) and in which are fixed the two blocks (25a, 25b) of elastomer material each covering an opposite angular sector of the said bush (21), each block (24a, 24b) comprising a central mass (25a, 25b) prolonged at its upper part by a bead (26a, 26b) partially overlapping the upper flange (22) and at its lower part by a bead (27a, 27b) partially overlapping the lower flange (23).

3. Elastic articulation according to Claim 2, **characterized in that** the external armature (21) is made of steel.

4. Elastic articulation according to Claim 1, **characterized in that** the filtering element (50) comprises a central metal core (51) and two outer and opposed metal armatures (52a, 52b), of sectorial outer shape and comprising at their upper part a collar (53a, 53b), the said core (51) and the said armatures (52a, 52b) being connected together by the two blocks (54a, 54b) of elastomer material which each comprise a carrier buffer (55a, 55b) overlapping the corresponding collar (53a, 53b).

5. Elastic articulation according to any one of Claims 2 to 4, **characterized in that** the outer diameter determined by the two armatures (52a, 52b) of the filtering element (50) is slightly greater than the inner diameter of the bush (21) of the damping element (20) so as to obtain precompression of the two blocks (54a, 54b) of elastomer material of the filtering element (50).

6. Elastic articulation according to Claims 4 and 5, **characterized in that** the central core (51) and the two armatures (52a, 52b) are made of steel.

7. Elastic articulation according to any one of Claims 4 to 6, **characterized in that** the central core (51) is formed by a tube.

8. Elastic articulation according to Claims 1 and 4, **characterized in that** the block (54a, 54b) of elastomer material of the filtering element (50) comprises an intermediate lamination (57a, 57b).

9. Elastic articulation according to any one of the preceding claims, **characterized in that** it comprises means (28, 58) for positioning and for locking the damping element (20) in the filtering element (50).

10. Elastic articulation according to Claim 9, **characterized in that** the positioning and locking means are formed by two diametrically opposed radial holes (28) made in the bush (21) of the filtering element and by two diametrically opposed bosses (58) made on the external faces of the outer armatures (52a, 52b) of the damping element (50), the two bosses (58) being intended to enter the two holes (28) at the moment of the fastening of the filtering element (50) into the damping element (20).

11. Elastic articulation according to any one of Claims 1 to 8, **characterized in that** the elastomer of the blocks (24a, 24b) of the damping element (20) possesses a different rigidity from the elastomer of the blocks (54a, 54b) of the filtering element (50).

12. Elastic articulation according to Claim 11, **characterized in that** the elastomer of the blocks (24a, 24b) of the damping element (20) consists of a synthetic rubber.

13. Elastic articulation according to Claim 11, **characterized in that** the elastomer of the blocks (54a, 54b) of the filtering element (50) consists of a mixture comprising natural rubber and additives.

## Patentansprüche

1. Elastisches Lager (1) für den Einbau eines Kraftfahrzeugfahrwerks, mit einem die Federwege des Fahrzeugs in Vertikal- und Längsrichtung dämpfenden Element (20) und einem zum Dämpfungselement (20) koaxialen Element, das die Kraftfahrzeuglängsschwingungen kleiner Amplituden filtert, **dadurch gekennzeichnet, dass** das filternde Element (50) ein vom Dämpfungselement (20) unabhängiges Element ist, wobei das Dämpfungselement (20) und das filternde Element (50) ineinandergesteckt sind und jeweils zwei aus Elastomermaterial bestehende, symmetrische und einander gegenüberstehende Blöcke (24a, 24b und 54a, 54b) aufweisen, die abwechselnd und um 90° gegeneinander versetzt angeordnet sind.

2. Elastisches Lager nach Anspruch 1, **dadurch gekennzeichnet, dass** das Dämpfungselement (20) eine metallische äußere Verstärkung (21) aufweist, die eine Krone bildet, die mit einem zur Außenseite der Krone (21) gerichteten oberen Kragen (22) und einem zur Innenseite der Krone (21) gerichteten unteren Kragen (23) versehen ist und in der die beiden Elastomerblöcke (25a, 25b) befestigt sind, die zwei einander gegenüberliegende Winkelsektoren der Krone (21) bedecken, wobei jeder Block (24a, 24b) eine Zentralmasse (25a, 25b) aufweist, die in ihrem oberen Bereich in einen Wulst (26a, 26b) übergeht, der den oberen Kragen (22) teilweise bedeckt, und in ihrem unteren Bereich in einen Wulst (27a, 27b) übergeht, der den unteren Kragen (23) teilweise bedeckt.

3. Elastisches Lager nach Anspruch 2, **dadurch gekennzeichnet, dass** die äußere Verstärkung (21) aus Stahl ist.

4. Elastisches Lager nach Anspruch 1, **dadurch gekennzeichnet, dass** das filternde Element (50) einen metallischen Zentralkern (51) und zwei einander gegenüberliegende, metallische äußere Verstärkungen (52a, 52b) aufweist, deren äußere Form jeweils einen Sektor bildet und die in ihrem oberen Bereich je einen Kragen (53a, 53b) besitzen, wobei der Kern (51) und die Verstärkungen (52a, 52b) durch die beiden Elastomerblöcke (54a, 54b) miteinander verbunden sind, die jeweils einen tragenden Anschlag (55a, 55b) aufweisen, der den zugeordneten Kragen (53a, 53b) bedeckt.

5. Elastisches Lager nach einem der Ansprüche 2 bis 4, **dadurch gekennzeichnet, dass** der durch die zwei Verstärkungen (52a, 52b) des filternden Elements (50) bestimmte Außendurchmesser geringfügig größer als der Innendurchmesser der Krone (21) des Dämpfungselements (20) ist, um eine Vorpressung der beiden Elastomerblöcke (54a, 54b) des filternden Elements (50) zu erzielen.

6. Elastisches Lager nach den Ansprüchen 4 und 5, **dadurch gekennzeichnet, dass** der Zentralkern (51) und die beiden Verstärkungen (52a, 52b) aus Stahl sind.

7. Elastisches Lager nach einem der Ansprüche 4 bis 6, **dadurch gekennzeichnet, dass** der Zentralkern (51) durch ein Rohr gebildet ist.

8. Elastisches Lager nach den Ansprüchen 1 und 4, **dadurch gekennzeichnet, dass** der Elastomerblock (54a, 54b) des filternden Elements (50) eine Zwischenverdickung (57a, 57b) aufweist.

9. Elastisches Lager nach einem der vorangehenden Ansprüche, **dadurch gekennzeichnet, dass** es Einrichtungen (28, 58) zur Positionierung und Verriegelung des Dämpfungselements (20) im filternden Element (50) aufweist.

10. Elastisches Lager nach Anspruch 9, **dadurch gekennzeichnet, dass** die Positionierungs- und Verriegelungseinrichtungen aus zwei Radialausnehmungen (28), die einander diametral gegenüberliegen und in der Krone (21) des Dämpfungselements ausgebildet sind, und aus zwei Buckeln (58), die einander diametral gegenüberliegen und an den Außenflächen der äußeren Verstärkungen (52a, 52b) des filternden Elements (50) ausgebildet sind, bestehen, wobei die beiden Buckel (58) dazu bestimmt sind, in die zwei Ausnehmungen (28) einzudringen, wenn das filternde Element (50) in das Dämpfungselement (20) gesteckt wird.

11. Elastisches Lager nach einem der Ansprüche 1 bis 8, **dadurch gekennzeichnet, dass** das Elastomer der Blöcke (24a, 24b) des Dämpfungselements (20) eine andere Steifigkeit als das Elastomer der Blöcke (54a, 54b) des filternden Elements (50) besitzt.

12. Elastisches Lager nach Anspruch 11, **dadurch gekennzeichnet, dass** das Elastomer der Blöcke (24a, 24b) des Dämpfungselements (20) ein Kunstkautschuk ist.

13. Elastisches Lager nach Anspruch 11, **dadurch gekennzeichnet, dass** das Elastomer der Blöcke (54a, 54b) des filternden Elements (50) eine Mischung ist, die Naturkautschuk und Zusätze enthält.
